# EUROPÄISCHE PATENTSCHRIFT

(11) **EP 1 236 591 B1**
(45) Veröffentlichungstag und Bekanntmachung des Hinweises auf die Patenterteilung: **17.11.2004**
(21) Anmeldenummer: 02000489.1
(22) Anmeldetag: 09.01.2002
(51) Int. Cl.: B60G 17/027

(54) **Federbein mit verstellbarer Vorspannung**
Suspension strut with adjustable preloading
Jambe de suspension à précontrainte réglable

(30) Priorität: 28.02.2001 DE 10109555
(43) Veröffentlichungstag der Anmeldung: 04.09.2002
(73) Patentinhaber: Bayerische Motoren Werke Aktiengesellschaft, 80809 München (DE)
(72) Erfinder: Bleicher, Stephan, 84069 Schierling (DE); Decker, Hubert, 84097 Herrngiersdorf (DE)

(56) Entgegenhaltungen:
- EP-A- 0 980 772
- DE-A- 19 510 032
- DE-A- 19 849 222
- DE-C- 945 674
- GB-A- 2 164 417
- US-A- 3 628 810
- US-A- 4 830 395
- US-A- 5 810 335
- US-A- 5 984 286

## Beschreibung

Die Erfindung betrifft ein Federbein mit verstellbarer Vorspannung, umfassend zwei Aufnahmen für eine gefederte und eine ungefederte Masse, eine sich an einer der beiden Aufnahmen abstützende Druckfeder, ein sich an der anderen Aufnahme abstützendes Zylindergehäuse, in dem ein Kolben axial verschiebbar gelagert ist, an dem sich die Druckfeder mit ihrem anderen Ende abstützt, und eine mit dem Zylindergehäuse verbundene Pumpe zur Beaufschlagung des Kolbens mit einem variablen Druck.

Federbeine werden hauptsächlich bei Kraftfahrzeugen eingesetzt, um die gefederten Massen, d. h. den Fahrzeugaufbau abzufedern und zu dämpfen. Um einer unterschiedlichen Beladung des Kraftfahrzeugs und/oder einer unterschiedlichen Beschaffenheit der Straßenoberfläche gerecht zu werden, werden zum Teil Federbeine mit verstellbarer Vorspannung verwendet. Es sind mechanische, elektromechanische, pneumatische und hydraulische Verstelleinrichtungen bekannt, deren Wirkungsweise darauf beruht, dass die Axialstellung eines die Druckfeder abstützenden Kolbens verändert wird. Die mechanische Verstellung des Kolbens kann zwar auf konstruktiv einfache Weise verwirklicht werden, sie kann aber nur im Stillstand des Fahrzeugs durchgeführt werden. Die elektromechanische Verstellung des Kolbens ermöglicht eine Fernbedienung und kann daher während der Fahrt vorgenommen werden. Neben einem Elektromotor ist aber zusätzlich noch ein Untersetzungsgetriebe erforderlich. Ein Nachteil besteht aber darin, dass sowohl der Motor als auch das Untersetzungsgetriebe einen verhältnismäßig großen Bauraum beanspruchen. Da eine hohe Leistung des Elektromotors erforderlich ist, kommt es auch zu einer starken Belastung des Bordnetzes. Im übrigen hat die große Anzahl sehr präziser Einzelelemente einen hohen Komponentenpreis zur Folge.

Bei einem in der GB-A-2 164 417 beschriebenen Federbein mit hydraulisch verstellbarer Vorspannung der eingangs genannten Art dient eine Dämpfereinrichtung zugleich zur Beaufschlagung des Kolbens mit einem variablen Druck. Genauer gesagt, die von dem an einer Kolbenstange angeordneten Überströmkolben voneinander getrennten Kammern eines Dämpfergehäuses stehen über Rückschlagventile mit dem Zylindergehäuse in Verbindung. Beim Ein- und Ausfedern des Federbeins wird Hydraulikflüssigkeit in das Zylindergehäuse gepumpt, so dass der Kolben zunehmend aus dem Zylindergehäuse ausgefahren und die Vorspannung der Druckfeder erhöht wird. Die Förderleistung dieser "Pumpe" hängt somit weitgehend von der Unebenheit der Fahrbahn ab. Das Zylindergehäuse ist über eine Leitung mit einem Vorratsbehälter verbunden. In dieser Leitung ist ein Magnetventil angeordnet, das durch Fernbedienung geöffnet werden kann, wenn der in dem Zylindergehäuse herrschende Druck abgesenkt werden soll.

Aus der DE-A-198 49 222 auch bereits ein hydropneumatisches Federbein mit einem als Feder wirkenden Gaspolster bekannt, bei dem ein Arbeitsraum mit einer Magnetnadelpumpe beaufschlagt werden kann.

Der Erfindung liegt die Aufgabe zugrunde, ein Federbein mit verstellbarer Vorspannung der eingangs genannten Gattung zu schaffen, das mit einem einfachen technischen Aufbau eine Verstellung der Vorspannung während der Fahrt ermöglicht.

Erfindungsgemäß wird diese Aufgabe mit einem gattungsgemäßen Federbein gelöst, das dadurch gekennzeichnet ist, dass die Pumpe eine elektrohydraulische Pumpe ist, die zusammen mit den zugehörigen Leitungen in das Zylindergehäuse integriert ist, und dass die Pumpe einen zum Zylindergehäuse koaxialen Rotor aufweist, der in einem Stator drehbar angeordnet ist, wobei der Rotor mit mindestens einem Nocken versehen ist, der mit mindestens einem Pumpenkolben zusammenwirkt.

Das erfindungsgemäße Federbein zeichnet sich bei einem einfachen technischen Aufbau durch eine hohe Betriebssicherheit aus, weil keine freiliegenden hydraulischen Leitungen erforderlich sind. Die elektrohydraulische Pumpe ermöglicht eine Fernbedienung, so dass die Vorspannung des Federbeins während der Fahrt vom Fahrer verändert werden kann.

Die Pumpe ist zweckmäßiger Weise ebenso wie das Zylindergehäuse mit einem Vorratsbehälter für eine Hydraulikflüssigkeit verbunden. In der das Zylindergehäuse mit dem Vorratsbehälter verbindenden Leitung ist dabei ein Entlastungsventil angeordnet. Durch Öffnen dieses Ventils kann der Druck in dem Zylindergehäuse abgesenkt und damit die Vorspannung des Federbeins verringert werden. Das Entlastungsventil ist vorzugsweise ein Magnetventil, wodurch eine Fernbedienung erleichtert wird.

Ein Ausführungsbeispiel der Erfindung ist in den Zeichnungen dargestellt und wird nachfolgend näher erläutert. Es zeigt:
Fig. 1 einen schematischen Längsschnitt durch ein Federbein, und
Fig. 2 in größerem Maßstab eine Einzelheit von Fig. 1.

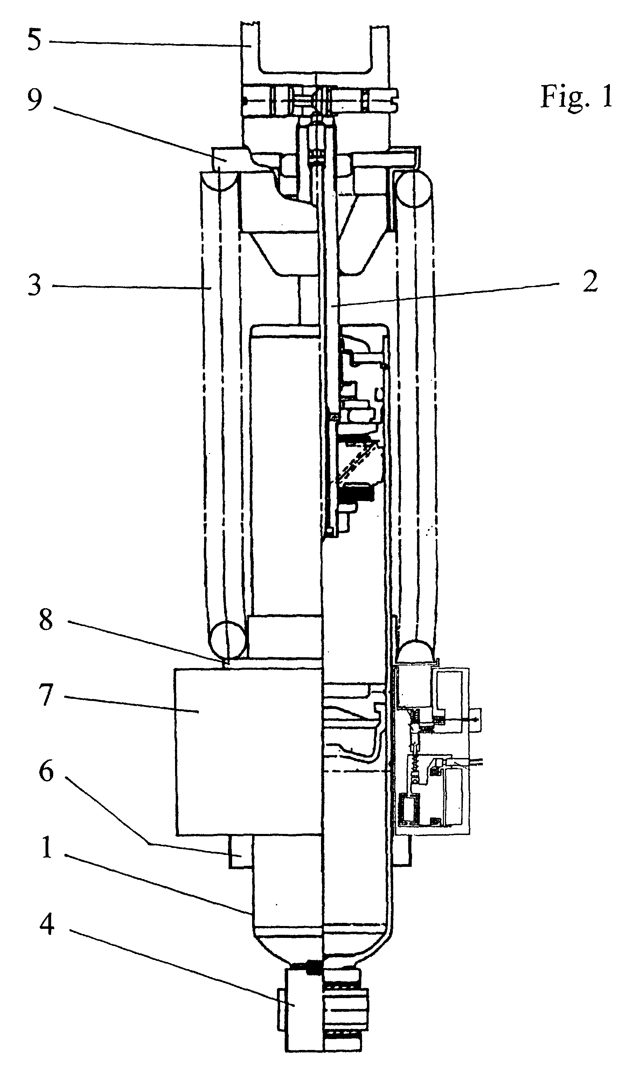

Fig. 1 zeigt eine teilweise geschnittene Seitenansicht eines Federbeins mit verstellbarer Vorspannung. Dieses Federbein besteht in an sich bekannter Weise grundsätzlich aus drei Teilen, nämlich einem Dämpfergehäuse 1, einer Kolbenstange 2 und einer Schraubenfeder 3. Die Kolbenstange 2 ist in dem Dämpfergehäuse 1 zu einer Axialbewegung geführt und mit einem in dem Dämpfergehäuse angeordneten hydraulischen Dämpfermechanismus verbunden. Das Dämpfergehäuse 1 ist mit einer als unteres Federbeinauge bezeichneten Aufnahme 4 zur gelenkigen Verbindung mit einem von zwei relativ zueinander beweglichen Komponenten versehen. Die Kolbenstange 2 ist mit einer als oberes Federbeinauge bezeichneten Aufnahme 5 zur gelenkigen Abstützung an der anderen Komponente versehen. Das Dämpfergehäuse 1 ist ferner mit einer Ringschulter 6 versehen. Diese Ringschulter 6 dient zur Abstützung eines auf das Dämpfergehäuse 1 aufgeschobenen ringförmigen Zylindergehäuses 7. In dem Zylindergehäuse 7 ist ein Kolben 8 axial verschiebbar geführt. An der Kolbenstange 2 ist ein Federteller 9 befestigt. Die Schraubenfeder 3 stützt sich am Kolben 8 und am Federteller 9 ab und hält die Kolbenstange 2 gegenüber dem Dämpfergehäuse 1 in einem ausgefahrenen Zustand.

Wenn auf die untere Aufnahme 4 des Federbeins eine vertikale Kraft ausgeübt wird, dann wird das Dämpfergehäuse 1 unter Kompression der Schraubenfeder 3 gegenüber der Kolbenstange 2 nach oben bewegt. Dieser Vorgang wird als Einfedern bezeichnet. Wenn die auf die Aufnahme 4 ausgeübte Axialkraft aufgehoben wird, dann kann sich die Schraubenfeder 3 entspannen, und das Dämpfergehäuse 1 bewegt sich gegenüber der feststehenden Kolbenstange 2 nach unten. Dieser Vorgang wird als Ausfedern bezeichnet. Die Relativbewegung beim Ein- und Ausfedern wird durch den im Dämpfergehäuse 1 angeordneten und mit der Kolbenstange 2 verbundenen Dämpfermechanismus gedämpft. Ein solcher Dämpfermechanismus besteht grundsätzlich aus einem mit der Kolbenstange 2 verbundenen Dämpferkolben, der mit Überströmkanälen versehen ist, die ein gebremstes Überströmen der Hydraulikflüssigkeit von der sich verkleinernden Kammer in die sich vergrößernde Kammer des Dämpfergehäuses 1 beiderseits des Kolbens ermöglichen.

Die vorstehende Konstruktion und Wirkungsweise des Federbeins ist dem Fachmann geläufig und bedarf keiner weiteren Erläuterung.

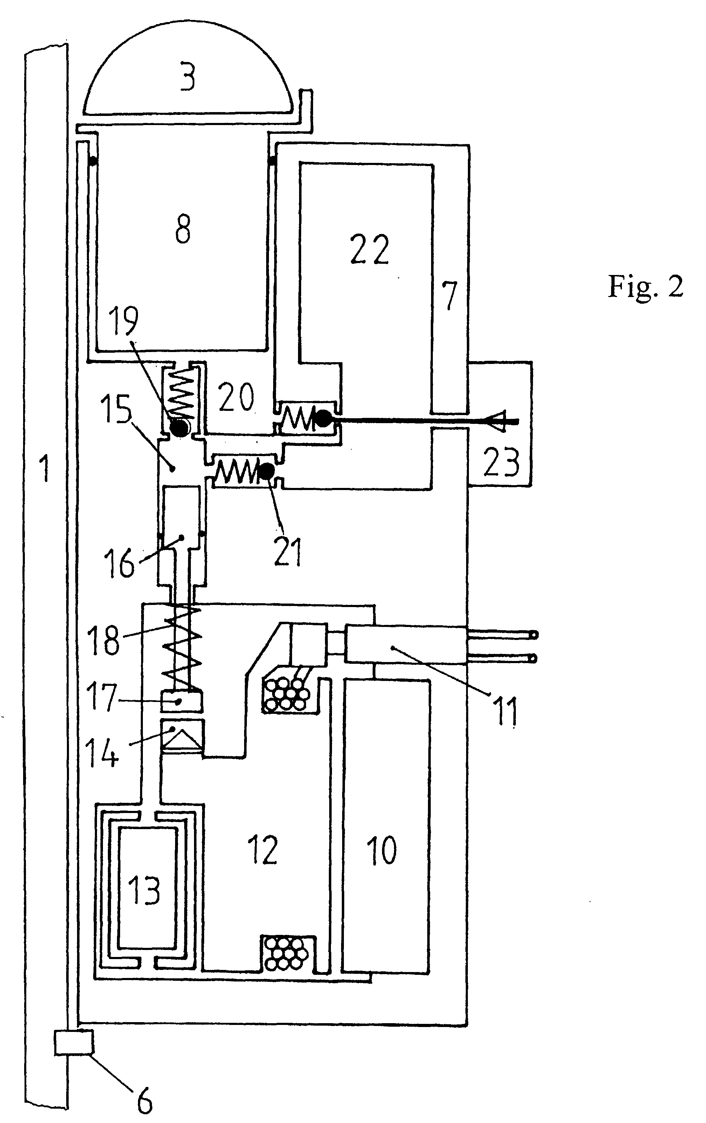

Fig. 2 zeigt einen Schnitt durch die rechte Hälfte des Dämpfergehäuses 1 und des Zylindergehäuses 7. In dem Zylindergehäuse 7 ist ein als Stator bezeichneter Permanentmagnet 10 ortsfest angeordnet. Ein als Rotor bezeichneter Ringanker 12 ist mit einem Lager 13 konzentrisch zu dem Dämpfergehäuse 1 und dem Stator 10 drehbar gelagert. Der Rotor 12 ist über Schleifbürsten 11 mit einer Spannungsquelle verbindbar, und er trägt an seiner Oberseite mindestens einen Nocken 14. In dem Zylindergehäuse 7 ist ferner mindestens ein axialer Verdichtungsraum 15 ausgebildet, in dem ein Pumpenkolben 16 beweglich gelagert ist. Ein Schaft 17 des Pumpenkolbens 16 ist mit der Kraft einer Schraubenfeder 18 nach unten vorgespannt, so dass er an der Nockenbahn 14 zur Anlage gelangt. Der Verdichtungsraum 15 steht über ein Rückschlagventil 19 mit einem den ringförmigen Kolben 8 aufnehmenden Druckraum 20 in Verbindung. Der Verdichtungsraum 15 steht ferner über ein Rückschlagventil 21 mit einem ringförmigen Vorratsraum 22 für eine Hydraulikflüssigkeit in Verbindung. Der Druckraum 20 steht über ein elektromagnetisch betätigbares Entlastungsventil 23 mit dem Vorratsraum 22 in Verbindung.

Wenngleich in der Zeichnung nur ein Pumpenkolben 16 gezeigt ist, so ist davon auszugehen, dass konzentrisch zum Dämpfergehäuse 1 auch mehrere Pumpenkolben 16 angeordnet sein können. Die Anordnung eines jeden Pumpenkolbens würde dabei der Darstellung nach Fig. 2 entsprechen. Ferner ist es möglich, dass die Nockenbahn 14 nicht nur einen, sondern mehrere nach oben ragende Nocken aufweist, so dass jeder Pumpenkolben 16 bei einer Umdrehung des Rotors 12 mehrfach angehoben und abgesenkt wird.

Wenn über die Schleifbürsten 11 an den Rotor 12 eine Spannung angelegt wird, dann wird ein Magnetfeld erzeugt, und der Rotor 12 wird in Drehung versetzt. Durch die Drehbewegung des Rotors 12 und der an dessen Oberseite angeordneten Nockenbahn 14 wird der Pumpenkolben 16 gegen die Vorspannkraft der Schraubenfeder 18 nach oben gedrückt, sobald das untere Ende des Kolbenschaftes 17 auf einen Nocken aufläuft. Durch diese Aufwärtsbewegung des Pumpenkolbens 16 wird in dem Verdichtungsraum 15 ein Druck aufgebaut. Wenn dieser Druck den im Druckraum 20 herrschenden Druck übersteigt, dann öffnet das Rückschlagventil 19 und Hydraulikflüssigkeit wird in den Druckraum 20 gepumpt. Wenn sich der Pumpenkolben 16 unter der Vorspannkraft der Schraubenfeder 18 wieder nach unten bewegt, dann schließt das Rückschlagventil 19, und in dem Verdichtungsraum 15 entsteht ein Unterdruck. Das hat zur Folge, dass das Rückschlagventil 21 öffnet, so dass Hydraulikflüssigkeit aus dem Vorratsraum 22 in den Verdichtungsraum 15 überströmen kann. Durch fortgesetztes Verdrehen des Rotors 12 wird demzufolge intermittierende Hydraulikflüssigkeit in den Druckraum 20 gepumpt, so dass der Kolben 8 zunehmend aus dem Zylindergehäuse 7 ausgefahren wird. Die sich am Kolben 8 abstützende Schraubenfeder 3 wird daher komprimiert, und die Vorspannung des Federbeins wird erhöht.

Dieser Vorgang wird bei jeder Umdrehung des Rotors 12 je nach Anzahl der auf der Nockenbahn 14 angeordneten Nocken und der in dem Zylindergehäuse 7 angeordneten Pumpenkolben 16 wiederholt.

Um die Vorspannung des Federbeins zu reduzieren, wird das elektromagnetische Entlastungsventil 23 gegen die Kraft einer Vorspannfeder geöffnet. Die Hydraulikflüssigkeit kann daher vom Druckraum 20 in den Vorratsraum 22 abfließen. Die auf die Unterseite des Kolbens ausgeübte Druckkraft nimmt daher ab, und die Schraubenfeder 3 kann sich dementsprechend entspannen.

Damit sich in dem System keine Luftpolster bilden können, ist der Vorratsraum 22 mit einer (nicht gezeigten) automatischen Entlüftungseinrichtung versehen. Um den von dem Stator 10 und dem Rotor 12 gebildeten Elektromotor vor einer Überlastung zu schützen, könnte dem Vorratsraum 22 ein Überdruckventil zugeordnet sein. Alternativ könnte dem Druckraum 20 ein Drucksensor zugeordnet sein, der eine den Schleifbürsten 11 zugeordnete Elektronik ansteuert.

Da der Rotor 12 eine hohe Anzahl von Polpaaren aufweisen kann, ist bei kleiner Baugröße eine geringe Drehzahl und gleichzeitig ein hohes Drehmoment möglich. Wenn der den Stator 10 bildende Permanentmagnet gegen Elektromagneten vertauscht wird, dann kann durch einen dem Druckraum 20 zugeordneten Drucksensor über eine externe Elektronik durch Veränderung der Anzahl der Polpaare der Elektromagneten die Drehzahl verändert werden. In einem solchen System ist ein Überlastschutz bereits integriert.

Über induktive Wegaufnehmer im Kolben 8 und eine Rückmeldung an eine den Schleifbürsten 11 zugeordnete Elektronik kann eine durch den Fahrer vorgewählte Vorspannung der Feder 3 erreicht werden.

### Bezugszeichenliste:

- 1: Dämpfergehäuse
- 2: Kolbenstange
- 3: Schraubenfeder
- 4: Aufnahme an 1
- 5: Aufnahme an 2
- 6: Ringschulter
- 7: Zylindergehäuse
- 8: Kolben
- 9: Federteller
- 10: Stator
- 11: Schleifbürsten
- 12: Rotor
- 13: Lager
- 14: Nockenbahn
- 15: Verdichtungsraum
- 16: Pumpenkolben
- 17: Kolbenschaft
- 18: Schraubenfeder
- 19: Rückschlagventil
- 20: Druckraum
- 21: Rückschlagventil
- 22: Vorratsraum
- 23: Entlastungsventil

## Patentansprüche

1. Federbein mit verstellbarer Vorspannung, umfassend zwei Aufnahmen (4, 5) für eine gefederte und eine ungefederte Masse, eine sich an einer der beiden Aufnahmen (5) abstützende Druckfeder (3), ein sich an der anderen Aufnahme (4) abstützendes Zylindergehäuse (7), in dem ein Kolben (8) axial verschiebbar gelagert ist, an dem sich die Druckfeder (3) mit ihrem anderen Ende abstützt, und eine mit dem Zylindergehäuse (7) verbundene Pumpe (12, 16) zur Beaufschlagung des Kolbens (8) mit einem variablen Druck, **dadurch gekennzeichnet, dass** die Pumpe (12, 16) eine elektrohydraulische Pumpe ist, die zusammen mit den zugehörigen Leitungen in das Zylindergehäuse (7) integriert ist, und dass die Pumpe (12, 16) einen zum Zylindergehäuse (7) koaxialen Rotor (12) aufweist, der in einem Stator (10) drehbar angeordnet ist, wobei der Rotor (12) mit mindestens einem Nocken (14) versehen ist, der mit mindestens einem Pumpenkolben (16) zusammenwirkt.

2. Federbein nach Anspruch 1, **dadurch gekennzeichnet, dass** die Pumpe (12, 16) und das Zylindergehäuse (7) mit einem Vorratsbehälter (22) für eine Hydraulikflüssigkeit verbunden sind, und dass in der den Zylinder mit dem Vorratsbehälter verbindenden Leitung ein Entlastungsventil (23) angeordnet ist.

3. Federbein nach Anspruch 2, **dadurch gekennzeichnet, dass** das Entlastungsventil (23) ein Magnetventil ist.

## Claims

1. A spring leg with adjustable prestress, comprising two holders (4, 5) for a sprung and an unsprung mass, a pressure spring (3) abutting one of the two holders (5), a cylinder housing (7) abutting the other holder (4) and containing an axially movable piston (8) abutting the other end of the pressure spring (3), and a pump (12, 16) connected to the cylinder housing (7) for subjecting the piston (8) to a variable pressure, **characterised in that** the pump (12, 16) is an electrohydraulic pump which is incorporated together with the associated pipes in the cylinder housing (7) and the pump has a rotor (12) coaxial with the cylinder housing (7) and rotatably disposed in a stator (10), wherein the rotor (12) has at least one cam (14) which co-operates with at least one pump piston (16).

2. A spring leg in accordance with claim 1, **characterised in that** the pump (12, 16) and the cylinder housing (7) are connected to a storage container (22) for a hydraulic fluid, and a relief valve (23) is disposed in the pipe collecting the cylinder to the storage container.

3. A spring leg in accordance with claim 2, **characterised in that** the relief valve (23) is a solenoid valve.

## Revendications

1. Jambe de suspension à précontrainte réglable comportant deux moyens de fixation (4, 5) pour une masse suspendue et une masse non suspendue, un ressort de compression (3) s'appuyant contre l'un des moyens de fixation (5), un cylindre (7) s'appuyant contre l'autre moyen de fixation (4), un piston (8) coulissant axialement dans le cylindre, le ressort de compression (3) s'appuyant par son autre extrémité contre le piston, ainsi qu'une pompe (12, 16) reliée au cylindre pour solliciter le piston (8) avec une pression variable,
**caractérisée en ce que**
la pompe (12, 16) est une pompe hydraulique intégrée avec ses conduites dans le cylindre et la pompe (12, 16) comporte un rotor (12) coaxial au cylindre (7), logé à rotation dans un stator (10), le rotor (12) comportant au moins une came (14) coopérant avec au moins un piston de pompe (16).

2. Jambe de suspension selon la revendication 1,
**caractérisée en ce que**
la pompe (12, 16) et le cylindre (7) sont reliés à un réservoir (22) contenant du liquide hydraulique, et une soupape de décharge (23) est prévue dans la conduite reliant le cylindre au réservoir.

3. Jambe de suspension selon la revendication 2,
**caractérisée en ce que**
la soupape de décharge (23) est une soupape électromagnétique.
